# EUROPÄISCHE PATENTANMELDUNG

(11) **EP 2 031 009 A1**
(43) Veröffentlichungstag der Anmeldung: **04.03.2009**
(21) Anmeldenummer: 07017237.4
(22) Anmeldetag: 03.09.2007
(51) Int. Cl.: C08G 63/08, B01D 3/00

(54) **Reinigungsvorrichtung zur Abtrennung von Dilactid aus Stoffgemischen, Polymerisationsvorrichtung, Verfahren zur Abtrennung von Dilactid aus Stoffgemischen sowie Verwendung**

(71) Anmelder: Uhde Inventa-Fischer GmbH, 13509 Berlin (DE)
(72) Erfinder: Hagen, Rainer, Dr., 13465 Berlin (DE); Mühlbauer, Udo, 10119 Berlin (DE)
(74) Vertreter: Pfenning, Meinig & Partner GbR

(57) **Zusammenfassung**

Vorliegende Erfindung betrifft eine Vorrichtung zur Abtrennung eines bioabbaubaren, intermolekularen cyclischen Diesters einer alpha-Hydroxycarbonsäure aus Stoffgemischen, die zusätzlich die dazu korrespondierende alpha-Hydroxycarbonsäure des Diesters enthalten. Insbesondere ist der Diester dabei Dilactid und die Säure Milchsäure. Weiterhin betrifft vorliegende Erfindung ein Verfahren zur Abtrennung von Dilactid aus Stoffgemischen, das auf einem modifizierten, destillativen Verfahren beruht. Daneben beschreibt die vorliegende Erfindung eine Polymerisationsvorrichtung, insbesondere zur Darstellung von Polylactid. Ebenso werden Verwendungszwecke sowohl der Vorrichtungen als auch des Verfahrens angegeben.

## Beschreibung

Vorliegende Erfindung betrifft eine Vorrichtung zur Abtrennung eines bioabbaubaren, intermolekularen cyclischen Diesters einer alpha-Hydroxycarbonsäure aus Stoffgemischen, die zusätzlich die dazu korrespondierende alpha-Hydroxycarbonsäure des Diesters enthalten. Insbesondere ist der Diester dabei Dilactid und die Säure Milchsäure. Weiterhin betrifft vorliegende Erfindung ein Verfahren zur Abtrennung von Dilactid aus Stoffgemischen, das auf einem modifizierten, destillativen Verfahren beruht. Daneben beschreibt die vorliegende Erfindung eine Polymerisationsvorrichtung, insbesondere zur Darstellung von Polylactid. Ebenso werden Verwendungszwecke sowohl der Vorrichtungen als auch des Verfahrens angegeben.

Bei der Herstellung von Polylactid ist die Reinheit des Monomeren, des Dilactids, eine wichtige Größe. Sie bestimmt das erreichbare Molekulargewicht und somit die mechanischen Eigenschaften des Polymeren. Das Monomere entsteht bei der Depolymerisation eines Milchsäure-Präpolymers und enthält normalerweise folgende Verunreinigungen: Wasser, Milchsäure, Lactoylmilchsäure und Oligomere der Milchsäure. Die Reinigung des Monomeren kann durch Kristallisation oder durch Rektifikation erfolgen. Beispielsweise beschreiben die DE 69 507 957 sowie die EP 1 136 480 die Reinigung von Dilactid durch Kristallisation. Dabei ist nachteilig, dass durch einmalige Kristallisation das Dilactid in nur unzulänglicher Reinheit erhalten wird. Durch mehrere Kristallisationsstufen wird zwar die gewünschte Reinheit erhalten, allerdings ist dies mit hohem Aufwand und Kosten verbunden.

Ebenso ist die Reinigung durch Rektifikation beispielsweise aus der EP 623 153, US 5,236,560 oder WO 2005/056509 bekannt. Nachteilig bei den bekannten Rektifikationsverfahren ist dabei, dass stets ein System aus zwei Rektifikationskolonnen verwendet werden muss. In der ersten Kolonne werden die Leichtsieder (Wasser und Milchsäure) über Kopf destilliert, im Sumpf erhält man Dilactid und Oligomere. In der zweiten Kolonne fallen Dilactid als gereinigtes Kopfprodukt und im Sumpf die Oligomere an.

Als Alternative zum 2-Kolonnensystem wird eine Rektifikationskolonne mit einer Seitenentnahme beschrieben (US 5,236,560), wodurch die benötigte Reinheit bereits mit einer Kolonne erzielt wird. Nachteil dieser Ausführung ist, dass der Seitenstrom dampfförmig abgezogen werden muss, was in der Praxis schwierig zu realisieren ist.

Milchsäure ist eine optisch aktive Substanz und tritt in der S(+)- und R(-)-Form auf. Der cyclische Diester existiert somit in drei enantiomeren Formen: S,S-Dilactid (L-Dilactid), R,R-Dilactid (D-Dilactid) und S,R-Dilactid (Meso-Dilactid). L-Dilactid und D-Dilactid haben bis auf die optische Aktivität identische Eigenschaften. Meso-Lactid ist eine optisch inaktive Substanz mit einem niedrigeren Schmelz- und Siedepunkt als L- bzw. D-Dilactid. Meso-Lactid kann somit ebenso sowohl durch Rektifikation als auch durch Kristallisation von L- bzw. D-Dilactid getrennt werden.

Aufgabe vorliegender Erfindung ist somit, eine Vorrichtung bzw. ein Verfahren anzugeben, mit dem eine möglichst effiziente und einfache Abtrennung von Dilactid aus Stoffgemischen erreicht werden kann, wobei das Dilactid in möglichst hoher stofflicher Reinheit und/oder optischer Reinheit erhalten werden kann.

Diese Aufgabe wird bezüglich der Reinigungsvorrichtung mit den Merkmalen des Patentanspruchs 1, bezüglich der Polymerisationsvorrichtung mit den Merkmalen des Anspruchs 16 sowie bezüglich des Verfahrens mit den Merkmalen des Patentanspruchs 20 gelöst. Die jeweils abhängigen Ansprüche stellen dabei vorteilhafte Weiterbildungen dar. Mit den Patentansprüchen 42 bis 44 werden Verwendungsmöglichkeiten sowohl der Vorrichtungen als auch des Verfahrens genannt.

Erfindungsgemäß wird eine Reinigungsvorrichtung zur Abtrennung eines bioabbaubaren, intermolekularen cyclischen Diesters einer alpha-Hydroxycarbonsäure der Formel I bereitgestellt, 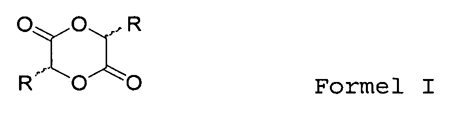 wobei R ausgewählt ist aus Wasserstoff oder linearen oder verzweigten aliphatischen Resten mit 1 bis 6 Kohlenstoffatomen,
aus Stoffgemischen, enthaltend den Diester der Formel I sowie die dazu korrespondierende alpha-Hydroxycarbonsäure der Formel II, 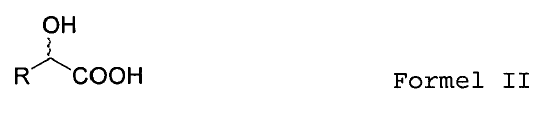 die mindestens folgende untereinander angeordnete Bestandteile umfasst:
a) kopfseitig mindestens einen Dephlegmator sowie mindestens einen Abzug,
b) mindestens ein den Durchmesser der Vorrichtung zumindest teilweise ausfüllendes Stoffaustauschpaket (Packung),
c) eine Trennwandkolonne, die durch eine vertikale Trennwand in zwei Zonen geteilt ist, wobei jede Zone mindestens zwei Stoffaustauschpakete (Packungen) aufweist, die je durch einen Zwischenraum voneinander getrennt sind, die erste Zone (Vorfraktionierungszone) mindestens einen Zugang zur Einspeisung des Stoffgemisches und die zweite Zone (Hauptfraktionierungszone) mindestens einen Seitenabzug zur Entnahme des gereinigten Produktes aufweist, und der mindestens eine Zugang sowie der mindestens eine Seitenabzug je im Bereich des mindestens einen Zwischenraumes angeordnet sind,
d) mindestens ein weiteres, den Durchmesser der Vorrichtung zumindest teilweise ausfüllendes Stoffaustauschpaket (Packung),
e) sumpfseitig, mindestens einen Verdampfer sowie mindestens einen Abzug,
wobei das Längenverhältnis der Trennwandkolonne zur Gesamtlänge der Vorrichtung 0,5 bis 0,9 beträgt.

Dabei sind die Stoffaustauschpakete (Packungen), die in der Reinigungsvorrichtung vorhanden sind, ausgewählt aus Mitteln, die eine hohe Oberfläche aufweisen und somit eine gute Verdampfung der durchströmenden Substanzen gewährleisten. Insbesondere kommen hierzu z.B. Raschig- und/oder Pallringe, Sattel, wie z.B. Berl-Sattel, Kugeln, Hacketten, Top-Packs oder Packungen aus Gewebe in Frage. Bevorzugt sind Packungen wegen der größeren Trennleistung und des geringen Druckverlustes. Durch die große Oberfläche ist ebenso gewährleistet, dass die Reinigungsvorrichtung sehr viele theoretische Böden aufweist und damit eine hohe Trennleistung auch von Substanzen mit sehr eng beieinander liegenden Siedepunkten aufweist.

Die Trennwand, die die Trennwandkolonne in eine Vorfraktionierungszone und eine Hauptfraktionierungszone teilt, kann dabei symmetrisch verlaufen, d.h. dass beide Zonen das gleiche Volumen aufweisen, aber auch so, dass eine der beiden Zonen ein größeres Volumen als die andere Zone einnimmt, also ein asymmetrischer Verlauf. Der asymmetrische Verlauf der Trennwand kann auch dergestalt sein, dass die Trennwand eine Schräge aufweist und sich damit das Verhältnis der beiden Rektifikationszonen über die Länge der Trennwandkolonne zueinander ändert.

In einer vorteilhaften Ausführungsform weist die Reinigungsvorrichtung jeweils zwischen den mit a) bis e) bezeichneten Bestandteilen Zwischenräume auf, d.h. die Bauteile sind nicht direkt aneinander anschließend zusammengebaut. Dabei besteht die Möglichkeit, dass jeder Zwischenraum der Reinigungsvorrichtung einen oder mehrere Seitenabzüge aufweist, über den fraktioniert die Entnahme eines gereinigten Produktes erfolgen kann.

Der sumpfseitig angeordnete Verdampfer ist dabei bevorzugt ein Fallfilmverdampfer. Durch einen Fallfilmverdampfer wird erreicht, dass eine möglichst große Oberfläche des zu verdampfenden Stoffgemisches erreicht wird, was sich insbesondere bei der Handhabung von thermisch sensitiven Produkten als vorteilhaft erweist. Dies ermöglicht eine nachhaltige Verringerung der Verweilzeit des Stoffgemisches im Sumpf.

Die Trennwandkolonne der Reinigungsvorrichtung kann in verschiedenen vorteilhaften Ausführungsformen ausgestaltet sein. So ist es beispielsweise möglich, dass die Hauptfraktionierungszone zwei Stoffaustauschpakete aufweist, die durch einen Zwischenraum getrennt sind und in Höhe dieses Zwischenraumes ein oder mehrere Seitenabzüge angeordnet sind.

Alternativ hierzu ist es jedoch auch möglich, dass die Hauptfraktionierungszone der Trennwandkolonne drei Stoffaustauschpakete aufweist, wobei diese jeweils durch einen Zwischenraum getrennt sind. Hierbei ist sowohl die Ausführungsform denkbar, dass beide Zwischenräume jeweils mindestens einen Seitenabzug aufweisen, als auch die Ausführungsform, dass nur einer der beiden Zwischenräume, beispielsweise entweder der obere, oder der untere Zwischenraum, einen oder mehrere Seitenabzüge aufweist.

Um eine effiziente Aufreinigung des Diesters zu gewährleisten, ist es vorteilhaft, wenn sich im Anschluss an mindestens einen der Seitenabzüge der Reinigungsvorrichtung mindestens eine weitere Reinigungsvorrichtung anschließt. Dies kann beispielsweise eine Rektifikations- und/oder Kristallisationsvorrichtung sein. Prinzipiell ist die Anordnung der weiteren Reinigungsvorrichtungen dabei an jedem Seitenabzug der Reinigungsvorrichtung möglich. Dabei sind Ausführungsformen denkbar, dass lediglich eine weitere Reinigungsvorrichtung oder auch mehrere weitere Reinigungsvorrichtungen vorhanden sind. Insbesondere ist es dabei bevorzugt, dass sich an einen oder mehreren der Seitenabzüge der Trennwandkolonne die weitere Reinigungsvorrichtung anschließt. Ebenso ist es jedoch vorteilhaft, wenn sich die weitere Reinigungsvorrichtung, insbesondere eine Rektifikationsvorrichtung, direkt oberhalb der Trennwandkolonne über einen Seitenabzug, der im Zwischenraum zwischen der Trennwandkolonne und der darüber angeordneten Packungen angebracht ist, an die Reinigungsvorrichtung anschließt.

Die weiteren Reinigungsvorrichtungen, insbesondere die Rektifikations- oder Kristallisationsvorrichtungen, sind dabei vorteilhafterweise über eine Rückführung mit dem Zugang der Trennwandkolonne verbunden. Somit wird gewährleistet, dass möglichst wenig des ursprünglich eingesetzten Stoffgemisches während des Trennprozesses verloren geht. Im Falle, dass die weitere Reinigungsvorrichtung eine Rektifikationskolonne ist, ist die Rückführung dabei insbesondere sumpfseitig an der Rektifikationskolonne angebracht.

Erfindungsgemäß wird ebenso eine Polymerisationsvorrichtung zur Polymerisation eines bioabbaubaren, intermolekularen cyclischen Diesters einer alpha-Hydroxycarbonsäure der Formel I bereitgestellt, 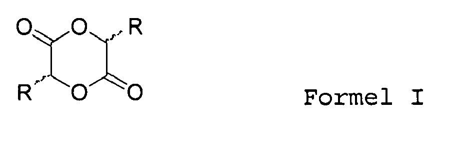 wobei R ausgewählt ist aus Wasserstoff oder linearen oder verzweigten aliphatischen Resten mit 1 bis 6 Kohlenstoffatomen bzw. bevorzugt Dilactid ist, wobei eine voranstehend beschriebene Reinigungsvorrichtung umfasst ist.

Der Reinigungsvorrichtung kann in der Polymerisationsvorrichtung bevorzugt ein Polymerisationsreaktor, der insbesondere zweistufig ausgebildet ist und einen Rührkessel sowie im Anschluss daran mindestens einen Strömungsreaktor aufweist, nachgeschaltet sein. In einer derartigen Variante findet somit eine direkte Weiterverarbeitung des gereinigten Dilactids statt. Alternativ hierzu ist es jedoch ebenso möglich, das Dilactid bis zur Polymerisation zu lagern.

Ebenso ist es in dieser Ausführungsform dabei bevorzugt, wenn in der Polymerisationsvorrichtung der Reinigungsvorrichtung eine Kondensationsvorrichtung zur Kondensation der Dämpfe aus dem Kopf der Kolonne (Dephlegmator) nachgeschaltet ist. Unter einer Kondensationsvorrichtung wird dabei eine Vorrichtung verstanden, die eine selektive Abtrennung oder zumindest eine Anreicherung des cyclischen Diesters der Formel I, bevorzugt Dilactid, aus der Dampfphase von Stoffgemischen, die neben dem Diester der Formel I noch mindestens die freie Säure der Formel II, bevorzugt Milchsäure, enthalten. Zur Kondensation wird dabei eine Kondensations- oder Waschflüssigkeit, die eine wässrige Lösung der Säure der Formel II ist, verwendet. Als weitere Bestandteile können in diesen Stoffgemischen noch Wasser und/oder Di- oder Oligomere der Säure der Formel II enthalten sein.

Erfindungsgemäß wird ebenso ein Verfahren zur zumindest teilweisen Abtrennung eines bioabbaubaren, intermolekularen cyclischen Diesters einer alpha-Hydroxycarbonsäure der Formel I bereitgestellt, 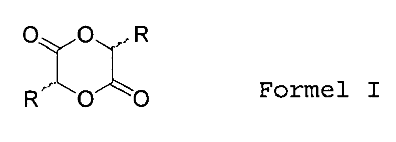 wobei R ausgewählt ist aus Wasserstoff oder linearen oder verzweigten aliphatischen Resten mit 1 bis 6 Kohlenstoffatomen aus Stoffgemischen, enthaltend den Diester der Formel I sowie die dazu korrespondierende alpha-Hydroxycarbonsäure der Formel II 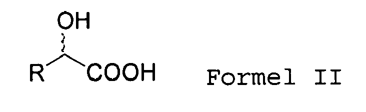 durch folgende Schritte:
a) Einspeisen des Stoffgemisches in eine eine Trennwandkolonne aufweisende Reinigungsvorrichtung, wobei die Reinigungsvorrichtung mindestens einen Seitenabzug aufweist,
b) Auftrennen des Stoffgemisches, wobei die Säure der Formel II in gasförmigem Aggregatszustand anfällt und
c) Entnahme des gereinigten Diesters der Formel I über den mindestens einen Seitenabzug.

Unter zumindest teilweiser Abtrennung wird dabei verstanden, dass der Diester der Formel I dabei zumindest in dem Stoffgemisch angereichert wird.

Der Diester wird nach der erfolgten Abtrennung bevorzugt in flüssigem Aggregatszustand entnommen.

Milchsäure sowie ihre linearen Oligomere und Polymere besitzen pro Molekül eine Hydroxyl- und eine Carboxylendgruppe. Da die Carboxylendgruppen analytisch einfacher zu bestimmen sind (Säure-Base-Titration), wird die Reinheit des Dilactids als Carboxylendgruppenkonzentration angegeben.

Erfindungsgemäß lässt sich mit dem Verfahren der Diester der Formel I in einer sehr hohen Reinheit erhalten. Dabei beträgt bevorzugt die Konzentration freier Carbonsäuregruppen (Carboxylendgruppen) maximal 50 mmol/kg, weiter bevorzugt maximal 30 mmol/kg, insbesondere maximal 20 mmol/kg.

In dem Stoffgemisch können ebenso weitere Stoffe, ausgewählt aus der Gruppe bestehend aus Wasser, korrespondierenden Oligomeren der alpha-Hydroxycarbonsäure der Formel III, 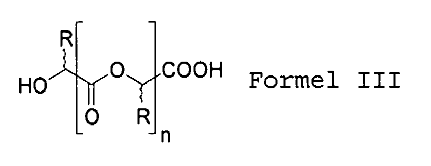 wobei n = 1 bis 10 ist und R wie bei den Formeln I und II definiert ist und/oder Mischungen hieraus, enthalten sein.

Das Verfahren gewährleistet ebenso, dass die alpha-Hydroxycarbonsäure der Formel II sowie Wasser als Kopfprodukt und/oder die Oligomeren der alpha-Hydroxycarbonsäure der Formel III als Sumpfprodukt abgezogen werden.

Erfindungsgemäß ist es dabei bevorzugt, wenn das Stoffgemisch der Trennwandkolonne in gasförmigem oder flüssigem Aggregatszustand oder als zweiphasiges Gemisch zugeführt wird.

Um das Verfahren möglichst effizient zu führen, ist es bevorzugt, wenn der Gewichtsanteil des cyclischen Diesters der Formel I in dem der Reinigungsvorrichtung zugeführten Stoffgemisch mindestens 50 Gew.-%, bevorzugt mindestens 75 Gew.-%, besonders bevorzugt mindestens 80 Gew.-% beträgt.

Die Reinigungsvorrichtung wird dabei bevorzugt bei Drücken kleiner 120 mbar, bevorzugt kleiner 100 mbar betrieben.

Die Aufgabe des Stoffgemisches in die Trennwandkolonne erfolgt bei einer Temperatur zwischen 90 °C und 210 °C, bevorzugt zwischen 110 °C und 140 °C.

Insbesondere ist der cyclische Diester der Formel I dabei Dilactid und die alpha-Hydroxycarbonsäure der Formel II Milchsäure.

Da es essentiell ist, dass das L-Dilactid in einer hohen Reinheit erhalten wird, erfolgt nach Entnahme des Dilactids in einer vorteilhaften Ausführungsform mindestens ein weiterer Trennungsschritt. Dies dient insbesondere zur zumindest teilweisen Separation von L- und Meso-Dilactid.

Hierbei sind verschiedene Ausführungsformen denkbar, bevorzugt wird hierbei jedoch Rektifikation und/oder Kristallisation angewandt.

Alternativ hierzu ist es jedoch auch möglich, dass bereits in der Trennwandkolonne gleichzeitig eine effiziente stoffliche Auftrennung (d.h. Abtrennung des Dilactids von den restlichen Bestandteilen des Stoffgemisches) sowie eine Auftrennung der Stereoisomeren des Dilactids erfolgt. Hierzu ist insbesondere eine Ausführungsform vorgesehen, in der die Trennwandkolonne mindestens zwei Seitenabzüge aufweist, wobei der erste Seitenabzug bezüglich des weiteren Seitenabzugs an der Reinigungsvorrichtung weiter kopfseitig angeordnet ist. Durch die Differenz der Siedepunkte von Meso-Dilactid und L-Dilactid wird es somit ermöglicht, dass weiter kopfseitig eine Meso-Dilactid-reiche Fraktion sowie weiter sumpfseitig eine L-Dilactid-reiche Fraktion entnommen werden kann. Das Verfahren ist dabei derart effizient, dass der Gehalt des Meso-Dilactids in der L-Dilactid-reichen Fraktion maximal 10 Gew.-%, bevorzugt maximal 6 Gew.-%, besonders bevorzugt maximal 4 Gew.-%, bzw. der Gehalt des L-Dilactids in der Meso-Dilactid-reichen Fraktion maximal 60 Gew.-%, bevorzugt maximal 50 Gew.-%, besonders bevorzugt maximal 40 Gew.-% beträgt.

In einer weiteren vorteilhaften Ausführungsform kann der Gehalt des Meso-Dilactids in der aus der Reinigungsvorrichtung entnommenen L-Dilactid-reichen Fraktion durch anschließende Kristallisation weiter verringert werden.

Ebenso ist es ökonomisch, wenn die bei diesem Kristallisationsprozess anfallende Meso-Dilactid-reiche Fraktion dem Stoffgemisch, das in die Trennwandkolonne eingespeist wird, wieder zugesetzt wird.

In einer weiteren vorteilhaften Ausführungsform wird der Gehalt des L-Dilactids in der an der Trennwandkolonne weiter kopfseitig entnommenen Meso-Dilactid-reichen Fraktion durch anschließende Rektifikation weiter verringert. In Analogie zu Voranstehendem ist es genauso bevorzugt, die bei der Rektifikation erhaltene L-Dilactid-reiche Fraktion dem Stoffgemisch, das in die Trennwandkolonne eingespeist wird, wieder zuzusetzen.

In einer bevorzugten Ausführungsform entstammt das ursprünglich in die Trennwandkolonne eingesetzte Stoffgemisch aus einer vorgeschalteten Kondensationsvorrichtung.

Das Verfahren eignet sich insbesondere zum Betreiben einer eingangs beschriebenen Reinigungsvorrichtung.

Die Reinigungsvorrichtung sowie das Verfahren finden Verwendung bei der Reinigung von Dilactid, zur Herstellung von dem wesentlichen enantiomeren L-Dilactid und/oder bei der Herstellung von Polylactid.

Vorliegende Erfindung wird anhand der beigefügten Figuren sowie der im Folgenden beschriebenen Beispiele näher beschrieben, ohne die Erfindung auf die dort genannten Parameter und Wertebereiche beschränken zu wollen.

Es zeigen
- Figur 1: eine Ausführungsform einer erfindungsgemäßen Polymerisationsvorrichtung anhand eines Fließbildes einer typischen Verfahrensführung zur Herstellung von Polylactid, ausgehend von Milchsäure,
- Figur 2: eine erfindungsgemäße Reinigungsvorrichtung mit einem Zugang und einem Seitenstrom, aus dem das gereinigte Dilactid entnommen wird,
- Figur 3: eine alternative Ausführung der erfindungsgemäßen Reinigungsvorrichtung, mit der gleichzeitig eine Reinigung von Dilactid sowie die Trennung von Meso- und L-Dilactid möglich ist,
- Figur 4: eine alternative Ausführungsformen der Reinigungsvorrichtung gemäß Figur 3, wobei hier die Seitenabzüge auch außerhalb des Trennwandbereichs der Kolonne angeordnet sein können,
- Figur 5: eine Variante der Reinigungsvorrichtung, bei der nach stofflicher Reinigung von Dilactid die Auftrennung von Meso- und LDilactid in einem separaten Prozessschritt erfolgt,
- Figur 6: eine Ausführungsform der erfindungsgemäßen Reinigungsvorrichtung, wobei zur Verringerung des Gehaltes an L-Dilactid in der Meso-Lactid-reichen Fraktion eine weitere Rektifikationskolonne angeschlossen wird,
- Figur 7: eine erfindungsgemäße Ausführungsform, bei der zur Optimierung des Reinheitsgrades sowohl der Meso-Lactid-reichen Fraktion als auch der L-Lactid-reichen Fraktion eine Rektifikationskolonne als auch eine Kristallisationsvorrichtung vorhanden sind.

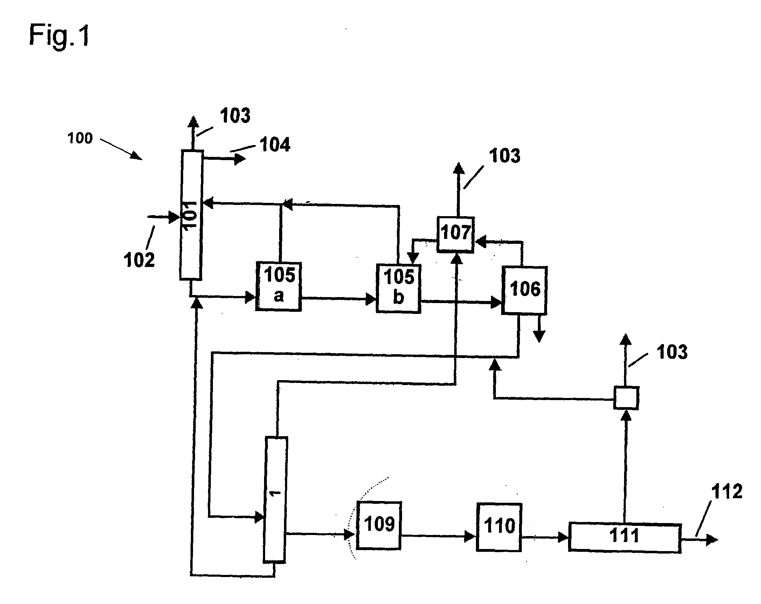

In Fig. 1 ist der kontinuierliche Gesamtprozess der Polylactidherstellung (PLA-Prozess) ausgehend von Milchsäure dargestellt. Der Prozess untergliedert sich dabei in die folgenden Teilschritte, die mit den in die Polymerisationsvorrichtung 100 integrierten, im Folgenden näher erläuterten Einzelbestandteilen ausgeführt werden. Die Polymerisationsvorrichtung 100 umfasst dabei eine erfindungsgemäße Reinigungsvorrichtung 1.

### 1. Aufkonzentration von Milchsäure

Das Ausgangsmaterial für den Prozess ist Milchsäure. Dabei muss der Gehalt an Milchsäure höher als 80 Gew.-% sein. Vorzugsweise beträgt dabei die Milchsäurekonzentration mehr als 90 %, weil das Wasser vor der Polymerisation entfernt werden muss. Die Trennung von Wasser und Milchsäure wird dabei in einer Rektifikationssäule 101 vorgenommen. Dabei wird über einen Absaugstutzen 103 Vakuum angelegt, das dampfförmig anfallende Wasser wird kondensiert und über einen weiteren Stutzen 104 kopfseitig entnommen. Die Zuführung der Milchsäure erfolgt dabei kontinuierlich über einen weiteren Stutzen 102. Das Destillat ist reines Wasser, das sumpfseitig anfallende Produkt ist Milchsäure mit einer Konzentration von mehr als 99 Gew.-%.

Neben der Abtrennung von Wasser aus dem Ursprungsmaterial (Milchsäure) dient die Rektifikationssäule 101 ebenso zur Trennung der Dämpfe aus den Präkondensations-Reaktoren 105a und 105b. Die Dampfströme bestehen dabei aus Milchsäure, Lactoylmilchsäure, Dilactid und Wasser. Das Wasser wird kopfseitig abgezogen, Milchsäure und ihre Derivate gehen in den Sumpf der Rektifikationssäule und von dort zusammen mit der aufkonzentrierten Milchsäure in den ersten Präkondensations-Reaktor 105a.

### 2. Präkondensation

Die aufkonzentrierte Milchsäure wird in einer Serie von zwei Reaktoren 105a und 105b durch Polykondensation in ein Präpolymer überführt. Die Polykondensation läuft unter zwei verschiedenen Drücken und Temperaturen ab, um den Reaktionsumsatz zu optimieren. Im ersten Reaktor 105a sind die Konditionen so gewählt, dass die Verdampfung von Milchsäure minimiert ist und gleichzeitig die Entfernung von Wasser erleichtert wird. Im zweiten Schritt der Polykondensation ist die Reaktionsgeschwindigkeit durch eine höhere Temperatur erhöht, gleichzeitig wird der Druck vermindert, um die Wasserkonzentration in der Schmelze weiter zu mindern. Die mittlere Molmasse (Zahlenmittel) des Präpolymers liegt dabei zwischen 500 und 2.000 g/mol.

### 3. Cyclisierende Depolymerisation

Das Präpolymer steht in chemischem Gleichgewicht mit dem cyclischen Dimer der Milchsäure, dem Dilactid. Durch Einstellung von Druck und Temperatur im Depolymerisationsreaktor 106 ist gewährleistet, dass das Lactid kontinuierlich aus dem Präpolymer gebildet wird und verdampft. Der Dampfstrom aus dem Depolymerisationsreaktor 106 besteht hauptsächlich aus Lactid. Wasser, Milchsäure und deren lineare Oligomere sind nur in untergeordneten Mengen vorhanden. Die Dämpfe werden teilweise in der erfindungsgemäßen Kondensationsvorrichtung 107 kondensiert: Wasser und der größte Anteil an Milchsäure bleiben dabei dampfförmig. Das Kondensat enthält zuvorderst das Lactid, Lactoylmilchsäure (das lineare Dimer der Milchsäure) und höhere lineare Oligomere. [Lactid liegt in zwei stereoisomeren Formen vor: das optisch aktive L,L-Lactid und das Mesolactid, aus einer Kombination einer L(+)- und D(-)-Milchsäureeinheit. Die D(-)-Einheiten stammen teils aus dem Edukt, teils werden sie durch Racemisierung von L(+)-Einheiten während der Präpolymerisation und der Depolymerisation gebildet.]

### 4. Lactid-Reinigung

Während der Ringöffnungspolymerisation hängt das erreichbare Molekulargewicht und somit bedeutende mechanische Eigenschaften des Polylactids vom Reinheitsgrad des Lactids ab. Die Hydroxyl-Gruppen der als Verunreinigung enthaltenen Milchsäure und Lactoylmilchsäure dienen dabei als Ausgangspunkt der Polymerisation. Je höher die Konzentration der Hydroxyl-Gruppen im Lactid ist, desto geringer fällt das erreichbare Molekulargewicht des Polymers aus. Die Konzentration der Hydroxyl-Gruppen im Rohlactid ist nach der cyclisierenden Depolymerisation zu hoch. Das kondensierte Lactid wird in einer erfindungsgemäßen Reinigungsvorrichtung 1 bis zur benötigten Hydroxylgruppenkonzentration aufgereinigt. Das gereinigte Lactid wird der Reinigungsvorrichtung 1 als Seitenprodukt entnommen. Das Destillat und das Sumpfprodukt werden dem Prozess an unterschiedlichen Stellen wieder zugeführt. Neben dem Molekulargewicht des Polylactids werden seine Eigenschaften stark durch den D-Gehalt (die Menge an strukturellen Einheiten, die die D-Konfiguration aufweisen) beeinflusst.

### 5. Ringöffnungspolymerisation

Die Ringöffnungspolymerisation wird in einem Reaktor unternommen, der aus einer Kombination eines Rührkessels 109 und eines Rohrreaktors 110 gebildet ist. Im ersten Reaktor 109 wird das niedrigviskose Lactid zu PLA polymerisiert mit einer Umsetzungsrate von ca. 50 %. Katalysator und Additive werden homogen in die Schmelze eingemischt.

Im Rohreaktor 110 wird die Polymerisationsreaktion so lange fortgeführt, bis ein chemisches Gleichgewicht zwischen Polymer und Monomer erreicht wird. Die maximale Umsetzung des Monomers beträgt ca. 95 %. Während der Polymerisation erhöht sich die Viskosität auf ca. 10.000 pa·sec.

### 6. Entmonomerisierung

Um ein stabiles Polylactid zu erhalten, ist die Monomerkonzentration von ungefähr 5 Gew.-% in der Schmelze zu hoch. Deswegen muss eine Entmonomerisierung durchgeführt werden. Dies wird durch eine Entgasung der Schmelze in einem Doppelschneckenextruder 111 erreicht. Aufgrund der Tatsache, dass die Ringöffnungspolymerisation eine Gleichgewichtsreaktion ist, wird ein Stabilisator vor der Entmonomerisierung zugegeben, um die Rückbildung des Monomers während und nach der Entgasung zu verhindern.

### 7. Granulierung und Kristallisation

Anschließend an die Entmonomerisierung wird die Schmelze dem Extruder 111 entnommen und in ein Granulat 112 überführt. Dabei können sowohl Stranggranulation oder Unterwasser-Granulation durchgeführt werden. In beiden Fällen muss das PLA-Granulat vor der Trocknung und der Verpackung kristallisiert werden. Die Kristallisation wird bei erhöhten Temperaturen und unter Rühren durchgeführt, solange bis das Granulat nicht mehr aneinander klebt.

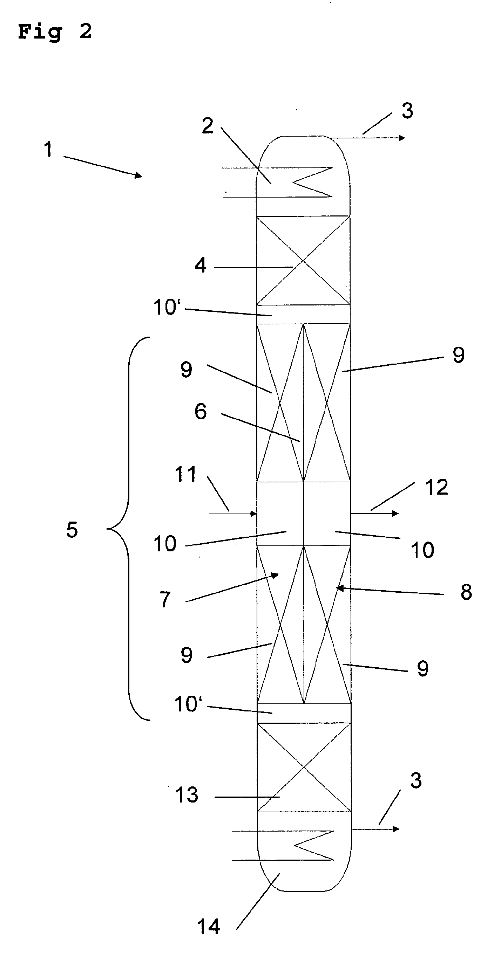

Figur 2 zeigt die einfachste Ausführungsform der erfindungsgemäßen Reinigungsvorrichtung 1. Diese weist, von der Kopfseite beginnend, folgende Bestandteile auf: einen Dephlegmator 2 zur Kondensation der aus der Trennwandkolonne 5 kommenden Brüden, die zum größten Teil aus leichtflüchtigen Stoffen, wie beispielsweise Wasser oder Milchsäure, bestehen, kopfseitig angebracht einen Abzug 3 sowie an den Dephlegmator anschließend ein Stoffaustauschpaket 4, das gegebenenfalls noch vom Dephlegmator 2 über einen weiteren Zwischenraum (nicht abgebildet) getrennt sein kann. Unterhalb des Stoffaustauschpaketes 4 befindet sich ein Zwischenraum 10', woran sich der Trennwandbereich der Kolonne, der die Auftrennung des Stoffgemisches in nur einer Kolonne ermöglicht, anschließt. Die Trennwandkolonne weist eine vertikale Trennwand 6 auf und ist somit in zwei Zonen, nämlich die Vorfraktionierungszone 7 und die Hauptfraktionierungszone 8, aufgetrennt. Die beiden Zonen weisen jeweils zwei Stoffaustauschpakete 9 auf, die je durch Zwischenräume 10 voneinander getrennt sind. Die Vorfraktionierungszone 7 hat zur Zuführung des Stoffgemisches dabei einen Zugang 11, während die Hauptfraktionierungszone 8 zur Entnahme des gereinigten Dilactids einen Seitenabzug 12 aufweist. Unterhalb der Trennwandkolonne 5 befindet sich ein weiterer Zwischenraum 10' sowie ein weiteres Stoffaustauschpaket 13. Sumpfseitig ist ein Fallfilmverdampfer 14 angebracht, bevorzugt neben dem Sumpfbehälter bzw. der Vorrichtung 1. Der Fallfilmverdampfer 14 kann vom Stoffaustauschpaket 13 gegebenenfalls über einen weiteren Zwischenraum abgetrennt sein. Im Bereich des Fallfilmverdampfers 14 ist ebenso ein Abzug 3 zur Entfernung linearer Oligomere sowie Dilactid vorhanden. Der Fallfilmverdampfer 14 ist seitlich an den Kolonnenschuss montiert.

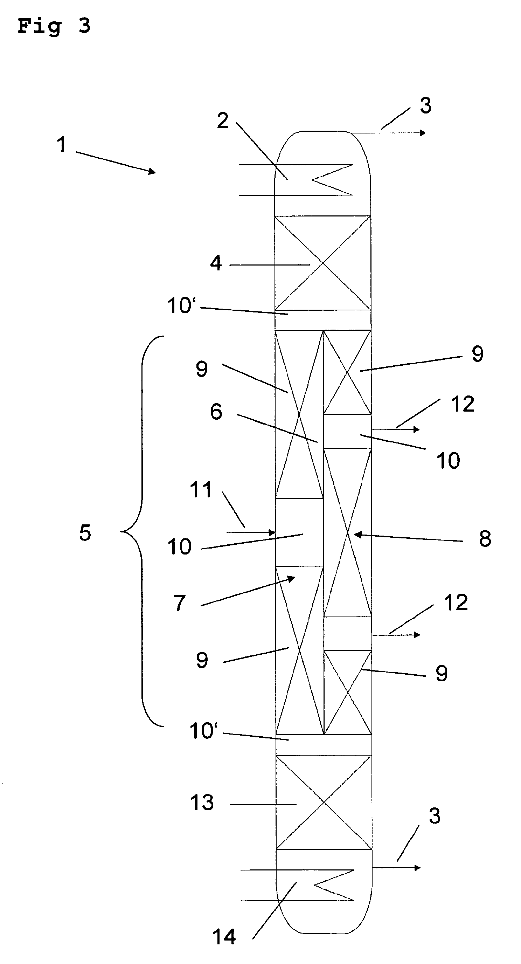

In Figur 3 ist eine ähnliche Ausführungsform wie in Figur 1 dargestellt, wobei der einzige Unterschied in der Ausführung der Trennwandkolonne 5 besteht. Im Unterschied zur Ausführungsform in Figur 2 weist hier die Hauptfraktionierungszone 8 drei Stoffaustauschpakete 9 auf, die jeweils durch einen Zwischenraum 10 voneinander getrennt sind. Jeder dieser Zwischenräume besitzt dabei einen Seitenabzug 12. Durch diese Ausführungsform der Trennwandkolonne 5 wird es ermöglicht, dass gleichzeitig eine stoffliche Auftrennung dergestalt erfolgt, dass die im eingehenden Stoffgemisch vorhandenen Komponenten, wie Milchsäure und Wasser kopfseitig, und die Oligomeren sumpfseitig abgezogen werden, während der Hauptanteil des Dilactids über die Seitenabzüge 12 entfernt werden kann. Gleichzeitig erfolgt dabei eine Auftrennung der Stereoisomeren, wobei die Meso-Dilactid-reiche Fraktion im oberen der beiden Seitenabzüge 12 und die L-Dilactid-reiche Fraktion über den unteren der beiden Seitenabzüge 12 entnommen werden kann, so dass simultan eine stoffliche Trennung der einzelnen Komponenten neben einer optischen Auftrennung der Lactid-Stereoisomeren erfolgt.

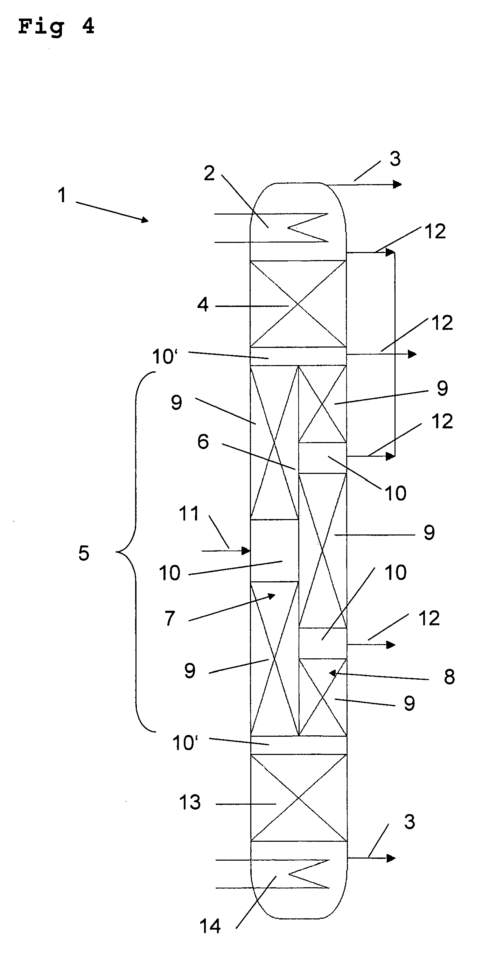

Dabei ist der obere Seitenabzug 12 nicht zwingendermaßen im Bereich der Trennwand 6 angeordnet, sondern kann auch, wie in Figur 4 dargestellt, an weiter oben angeordneten Zwischenräumen 10 der Reinigungsvorrichtung 1 angebracht sein. Ebenso ist die Möglichkeit gegeben, dass mehrere Seitenabzüge 12 an verschiedenen Positionen vorhanden sind.

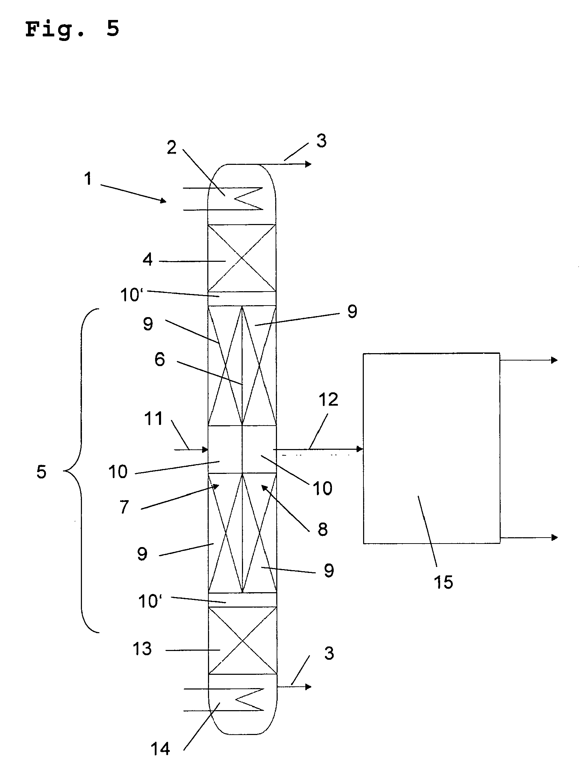

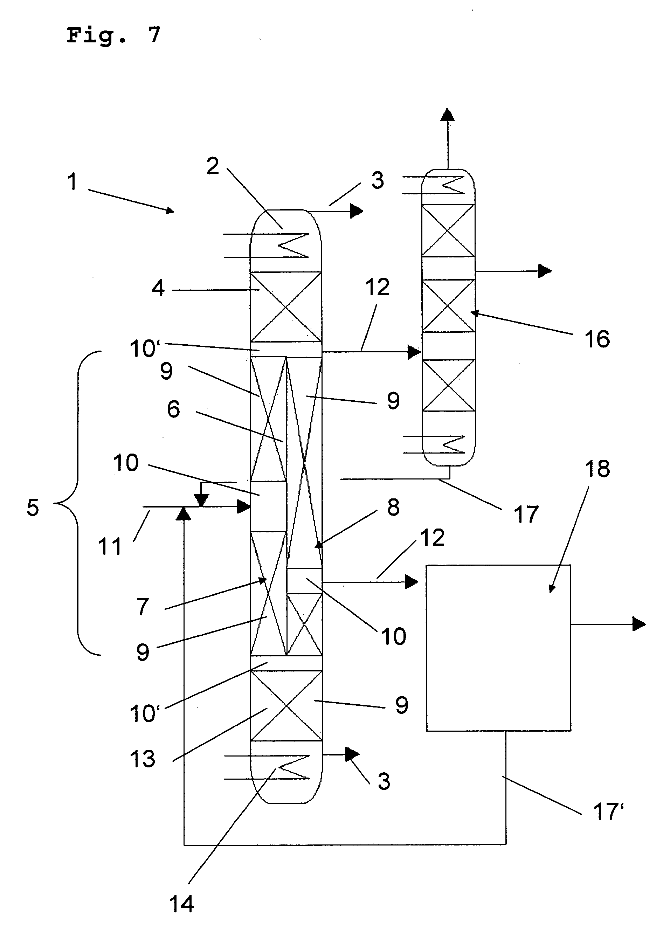

In Figur 5 ist eine Ausführungsform dargestellt, bei der die Reinigungsvorrichtung 1 mit nur einem Seitenabzug 12 ausgeführt ist, woran sich eine weitere Reinigungsvorrichtung 15 anschließt. Diese Reinigungsvorrichtung 15 kann entweder eine Rektifikationskolonne 16 oder eine Kristallisationsvorrichtung 18 (vgl. Fig. 7) sein und dient der Abtrennung von L-Dilactid und Meso-Dilactid.

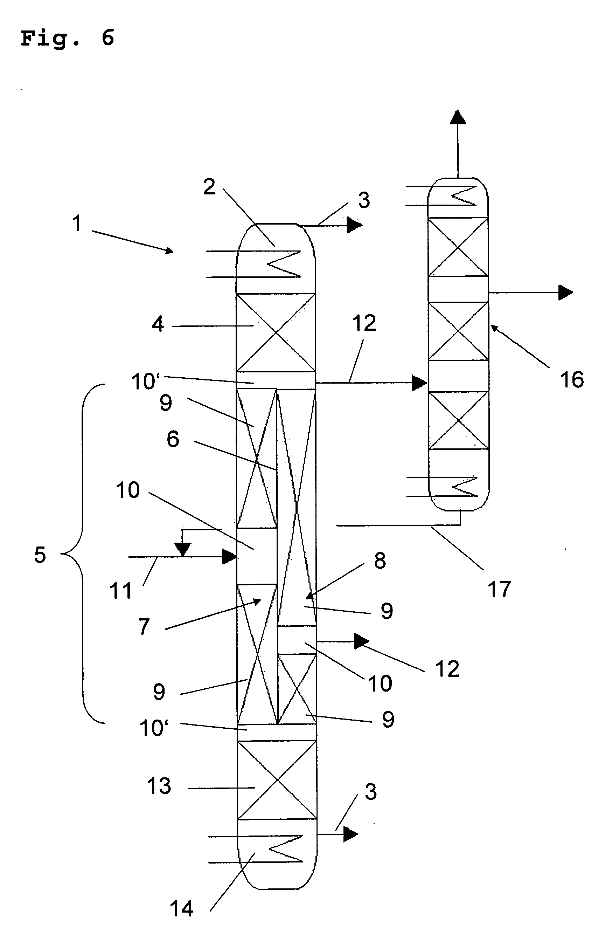

In Figur 6 ist eine Ausführungsform dargestellt, bei der über die Reinigungsvorrichtung 1 eine Auftrennung in eine Meso-Dilactid-reiche Fraktion und eine L-Dilactid-reiche Fraktion erfolgt, wobei die L-Dilactid-reiche Fraktion über einen weiter sumpfseitig, im Bereich der Trennwandkolonne 5 angeordneten Seitenabzug 12 abgezogen wird. Die Meso-Dilactid-reiche Fraktion, die am weiter kopfseitig angeordneten Seitenabzug 12 entnommen wird, wird zur Optimierung des Meso-Dilactid-Gehaltes in eine Rektifikationskolonne 16 eingespeist, wobei eine Meso-Dilactidoptimierte Fraktion mit einem Meso-Dilactid-Gehalt von > 90 % erhalten werden kann. Der Rektifikationskolonne wird dabei sumpfseitig ein L-Dilactid-reiches Gemisch mit einem L-Dilactid-Gehalt von > 80 % erhalten werden, das über eine Rückführung 17 zurück in die Zuführung 11 der Trennwandkolonne 5 eingespeist wird.

Figur 7 zeigt dabei eine Vorrichtungsform, wie sie auch schon in Figur 6 dargestellt ist, wobei zusätzlich noch eine Kristallisationsvorrichtung 18 vorhanden ist, um den L-Dilactid-Gehalt der L-Dilactid-reichen Fraktion weiter zu erhöhen. Dabei wird Meso-Dilactid auskristallisiert; dieser Rückstand wird ebenso über eine Rückführungsleitung 17' der Zuführung 11 der Trennwandkolonne 5 zugeführt. Das somit erhaltene L-Dilactid weist einen L-Dilactid-Gehalt von > 99 % auf, und eignet sich somit zum direkten Einsatz zur Polymerisation und Herstellung von PLA.

### Beschreibung der Versuchsanordnung

In einer Pilotanlage werden ca. 2,6 kg/h eines Milchsäurepräpolymers kontinuierlich zu dampfförmigem Dilactid depolymerisiert. Die Brüden aus dem Reaktor sind ein Gemisch aus Dilactid, Wasser, Milchsäure, Lactoylmilchsäure und Oligomeren der Milchsäure. Diese Brüden wurden in einem Dephlegmator teilkondensiert, so dass der Großteil des Wassers und ein Teil der Milchsäure dampfförmig bleiben, Dilactid, restliche Milchsäure und deren Oligomere bilden das Kondensat (Roh-Dilactid). Der Durchsatz beträgt ca. 2,5 kg/h.

Es werden die Carboxylendgruppen (Säure-Base-Titration) und der Meso-Dilactid-Gehalt (HPLC mit chiraler Säule) sowie der Schmelzpunkt (DSC) des Roh-Dilactids gemessen. Bei einer Probe werden typischerweise folgende Werte gemessen:
COOH = 250 mmol/kg,
Meso-Dilactid-Gehalt: 11,8 %,
Schmelzpunkt: 87 °C.

Das Roh-Dilactid wird dann kontinuierlich einer Trennwandkolonne gemäß Fig. 1 zugeführt.

Am Kopf der Kolonne wird ein Gemisch aus Dilactid und den leichterflüchtigen Komponenten wie Wasser und Milchsäure und im Sumpf der Kolonne die Oligomere der Milchsäure und der Restgehalt an Dilactid entnommen. Das gereinigte Dilactid wird als Seitenentnahme abgezogen. Die Trennwandkolonne hat einen Durchmesser von 100 mm. Sie ist gefüllt mit Packungen, die eine spezifische Oberfläche von 750 m²/m³ haben. Die Höhe der Kolonne ohne Verdampfer- und Kondensatorteil beträgt 9,75 m. Über den beiden Trennwandhälften befindet sich ein magnetisch gesteuertes Pendel, das den Rückfluss auf die beiden Trennwandhälften verteilt. Das Teilungsverhältnis kann dabei stufenlos verstellt werden.

Im Sumpf der Kolonne befindet sich ein Heizer mit einer Heizleistung von 3 kW (entspricht 100 %).

### Beispiel 1

Bei konstantem Roh-Dilactid-Zulauf wird die Sumpftemperatur auf 160 °C geregelt. Es ergibt sich ein Druckverlust über die Kolonne von 6 mbar bei einem Kopfdruck von 30 mbar. Die Temperatur des Kühlmediums für den Kondensator wird auf 115 °C im Vorlauf gesetzt. Das Teilungsverhältnis beträgt 7:5.

Das Rein-Dilactid hat einen Durchsatz von ca. 1500 g/h.

Der Carboxylendgruppengehalt im Rein-Dilactid beträgt durchschnittlich 43 mmol/kg.

### Beispiel 2

Bei konstantem Roh-Dilactid-Zulauf wird die Sumpftemperatur auf 164 °C geregelt. Der Druck am Kopf der Kolonne wird auf 22 mbar geregelt. Es ergibt sich ein Druckverlust über die Kolonne von 10 mbar. Die Temperatur des Kühlmediums für den Kondensator wird auf 124 °C im Vorlauf gesetzt. Das Teilungsverhältnis beträgt 7:5.

Im Sumpf werden 764 g/h entnommen, bei einem Rein-Dilactid-Durchsatz von 1523 g/h. Am Kopf der Kolonne fallen 209 g/h an.

Der Carboxylendgruppengehalt im Rein-Dilactid beträgt nicht mehr als 12 mmol/kg.

### Beispiel 3

Die Einstellungen aus Beispiel 2 werden beibehalten bis auf den Druck am Kopf der Kolonne. Dieser wird auf 20 mbar gesenkt. Es ergibt sich ein Druckverlust von 9 mbar. Die Menge an dampfförmigem Kopfprodukt erhöht sich auf 277 g/h, im Sumpf werden 774 g/h entnommen und der Rein-Dilatid-Austrag beträgt 1525 g/h.

Der Carboxylendgruppengehalt im Rein-Dilactid beträgt nicht mehr als 5 mmol/kg.

### Beispiel 4

Die Trennwandkolonne wird um eine zusätzliche Seitenentnahme erweitert (s. Fig. 3), wobei die obere und untere Seitenentnahme im Trennwandbereich liegen. Die Bedingungen und Einstellungen sind ansonsten wie in Beispiel 2. Die aus der oberen Seitenentnahme abgezogene Dilactid-Fraktion hat einen Durchsatz von 400 g/h, einen Meso-Dilactid-Gehalt von 42 % und einen Carboxylendgruppengehalt von 17 mmol/kg.

Für die untere Dilactid-Fraktion werden folgende Werte gemessen:

| | |
|---|---|
| Durchsatz: | 1600 g/h |
| Meso-Dilactid-Gehalt: | 6 % |
| Carboxylendgruppengehalt: | 10 mmol/kg |

### Beispiel 5

Die Einstellungen aus Beispiel 4 werden beibehalten, nur dass die Entnahme der Meso-Dilactid-reichen Fraktion nun direkt unterhalb des Kondensators der Kolonne erfolgt, wie in Fig. 4 dargestellt. Die Fraktion hat einen Carboxylendgruppengehalt von 176 mmol/kg, einen Meso-Dilactid-Gehalt von 68 % und einen Durchsatz von 330 g/h.

Für die untere Dilactid-Fraktion werden folgende Werte gemessen:

| | |
|---|---|
| Durchsatz: | 1600 g/h |
| Meso-Dilactid-Gehalt: | 3 % |
| Carboxylendgruppengehalt: | 13 mmol/kg |

### Beispiel 6

Die Meso-Dilactid-arme Rein-Dilactid-Fraktion aus Beispiel 4 wird im Labor einer fraktionierten Kristallisation aus der Schmelze unterzogen. Dazu werden in einen 500 ml Glaskolben mit Doppelmantel und beheiztem Ablassventil 400 ml flüssiges Dilactid gefüllt, die Temperatur im Doppelmantel auf 70 °C eingestellt und über Nacht bei dieser Temperatur gehalten. Am nächsten Morgen kann die nicht kristallisierte flüssige Fraktion abgelassen werden. Diese Fraktion weist einen Carboxylendgruppengehalt von 122 mmol/kg und einen Meso-Dilactid-Gehalt von 30 % auf.

Das im Glaskolben auskristallisierte Dilactid wird bei 110 °C aufgeschmolzen und abgelassen. Es wird ein Carboxylendgruppengehalt von 12 mmol/kg und ein Meso-Dilactid-Gehalt von 2 % gemessen.

Die auskristallisierte Fraktion wird einer weiteren Kristallisationsstufe unterzogen. Der gereinigte Dilactid hat einen Meso-Dilactid-Gehalt von Rückstand von 0,4 % und einen Carboxylendgruppengehalt von 2 mmol/kg.

### Beispiel 7

Mit einer kommerziellen Software zur Berechnung verfahrenstechnischer Prozesse wird die Trennung der Meso-Dilactid-reichen Fraktion aus Beispiel 5 in ein Milchsäure-reiches Kopfprodukt, eine Meso-Dilactid-reiche Seitenfraktion und eine L,L-Dilactid-reiches Sumpfprodukt durch Rektifikation rechnerisch simuliert, was einer Ausführungsform gemäß Fig. 4 entspricht.

Die Dampfdruckkurven für L,L-Dilactid und Meso-Dilactid werden der DE 38 20 299 entnommen. Die Phasengleichgewichte werden mit der UNIFAC-Methode berechnet.

Die Rektifikationskolonne wird folgendermaßen spezifiziert:

| | |
|---|---|
| Kopfdruck: | 45 mbar |
| Druckverlust über die Kolonne: | 10 mbar |
| Temp. des Kondensats: | 145 °C |
| Anzahl. der theor. Böden: | 47 |
| Zulauf-Boden: | 23 |
| Boden des Seitenabzugs: | 8 |
| Temp. im Kolonnesumpf: | 166 °C |

Man erhält folgende Produktzusammensetzung:
Meso-Fraktion: 95 % Meso-Dilactid, Carboxylendgruppengehalt kleiner 20 mmol/kg,
L-Fraktion: 90 % L,L-Dilactid, 10 % Meso-Dialctid,
Kopfprodukt: 76 % Meso-Dilactid, Carboxylendgruppengehalt 2650 mmol/kg.

## Patentansprüche

1. Reinigungsvorrichtung (1) zur Abtrennung eines bioabbaubaren, intermolekularen cyclischen Diesters einer alpha-Hydroxycarbonsäure der Formel I 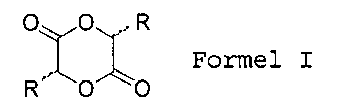 wobei R ausgewählt ist aus Wasserstoff oder linearen oder verzweigten aliphatischen Resten mit 1 bis 6 Kohlenstoffatomen,
aus Stoffgemischen, enthaltend den Diester der Formel I sowie die dazu korrespondierende alpha-Hydroxycarbonsäure der Formel II, 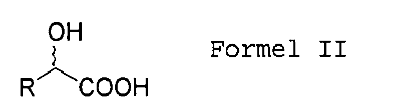 die mindestens folgende untereinander angeordnete Bestandteile umfasst:
a) kopfseitig mindestens einen Dephlegmator (2) sowie mindestens einen Abzug (3),
b) mindestens ein, den Durchmesser der Vorrichtung zumindest teilweise ausfüllendes Stoffaustauschpaket (4),
c) eine Trennwandkolonne (5), die durch eine vertikale Trennwand (6) in zwei Zonen (7, 8) geteilt ist, wobei jede Zone (7, 8) mindestens zwei Stoffaustauschpakete (9) aufweist, die je durch einen Zwischenraum (10) voneinander getrennt sind, die erste Zone (7) (Vorfraktionierungszone) mindestens einen Zugang (11) zur Einspeisung des Stoffgemisches und die zweite Zone (8) (Hauptfraktionierungszone) mindestens einen Seitenabzug (12) zur Entnahme des gereinigten Produktes aufweist, und der mindestens eine Zugang (11) sowie der mindestens eine Seitenabzug (12) je im Bereich des mindestens einen Zwischenraumes (10) angeordnet sind,
d) mindestens ein weiteres, den Durchmesser der Vorrichtung zumindest teilweise ausfüllendes Stoffaustauschpaket (13),
e) sumpfseitig, mindestens einen Verdampfer (14) sowie mindestens einen Abzug (3),
wobei das Längenverhältnis der Trennwandkolonne (5) zur Gesamtlänge der Reinigungsvorrichtung (1) 0,5 bis 0,9 beträgt.

2. Reinigungsvorrichtung (1) nach vorhergehendem Anspruch, **dadurch gekennzeichnet, dass** zwischen dem Dephlegmator (2) und dem Stoffaustauschpaket (4) und/oder zwischen dem Stoffaustauschpaket (13) und dem Verdampfer (14) ein Zwischenraum angeordnet ist.

3. Reinigungsvorrichtung (1) nach einem der Ansprüche 1 bis 2, **dadurch gekennzeichnet, dass** zwischen dem Stoffaustauschpaket (4) und der Trennwandkolonne (5) und/oder zwischen der Trennwandkolonne (5) und dem Stoffaustauschpaket (13) ein Zwischenraum (10') angeordnet ist.

4. Reinigungsvorrichtung (1) nach einem der beiden vorhergehenden Ansprüche, **dadurch gekennzeichnet, dass** der zwischen dem Dephlegmator (2) und dem Stoffaustauschpaket (4) und/oder zwischen dem Stoffaustauschpaket (4) und der Trennwandkolonne (5) angeordnete Zwischenraum (10) mindestens einen Seitenabzug (12) aufweist.

5. Reinigungsvorrichtung (1) nach einem der Ansprüche 1 bis 4, **dadurch gekennzeichnet, dass** der Verdampfer (14) ein Fallfilmverdampfer ist.

6. Reinigungsvorrichtung (1) nach einem der Ansprüche 1 bis 5, **dadurch gekennzeichnet, dass** die Hauptfraktionierungszone (8) der Trennwandkolonne (5) drei Stoffaustauschpakete (9) aufweist, wobei die Stoffaustauschpakete (9) je durch einen Zwischenraum (10) getrennt sind.

7. Reinigungsvorrichtung (1) nach vorhergehendem Anspruch, **dadurch gekennzeichnet, dass** beide Zwischenräume (10) jeweils mindestens einen Seitenabzug (12) aufweisen.

8. Reinigungsvorrichtung (1) nach Anspruch 6, **dadurch gekennzeichnet, dass** nur einer der beiden Zwischenräume (10) mindestens einen Seitenabzug (12) aufweist.

9. Reinigungsvorrichtung (1) nach einem der vorhergehenden Ansprüche, **dadurch gekennzeichnet, dass** sich im Anschluss an mindestens einen der Seitenabzüge (12) ( mindestens eine weitere Reinigungsvorrichtung (15), ausgewählt aus der Gruppe bestehend aus Rektifikations- und/oder Kristallisationsvorrichtung anschließt.

10. Reinigungsvorrichtung (1) nach vorhergehendem Anspruch, **dadurch gekennzeichnet, dass** sich an mindestens einen Seitenabzug (12) der Trennwandkolonne (5) mindestens eine weitere Reinigungsvorrichtung (15), ausgewählt aus der Gruppe bestehend aus Rektifikations- (16) und/oder Kristallisationsvorrichtung (18) anschließt.

11. Reinigungsvorrichtung (1) nach einem der beiden vorhergehenden Ansprüche, **dadurch gekennzeichnet, dass** die weitere Reinigungsvorrichtung (15) über eine Rückführung (17, 17') mit dem Zugang (11) der Trennwandkolonne (5) verbunden ist.

12. Reinigungsvorrichtung (1) nach einem der Ansprüche 9 bis 11, **dadurch gekennzeichnet, dass** sich an den mindestens einen Seitenabzug (12) des zwischen dem Stoffaustauschpaket (4) und der Trennwandkolonne (5) angeordneten Zwischenraums (10') mindestens eine Rektifikationskolonne (16) anschließt.

13. Reinigungsvorrichtung (1) nach vorhergehendem Anspruch, **dadurch gekennzeichnet, dass** die Rektifikationskolonne (16) mindestens ein Stoffaustauschpaket aufweist.

14. Reinigungsvorrichtung (1) nach einem der beiden vorhergehenden Ansprüche, **dadurch gekennzeichnet, dass** der sumpfseitig angeordnete Teil der Rektifikationskolonne (16) über eine Rückführung (17) mit dem Zugang (11) der Trennwandkolonne (5) verbunden ist.

15. Reinigungsvorrichtung (1) nach einem der Ansprüche 9 bis 14, **dadurch gekennzeichnet, dass** sich an mindestens einen Seitenabzug (12) der Trennwandkolonne (5) mindestens eine Kristallisationsvorrichtung (18) anschließt, die vorzugsweise über eine Rückführung (17') mit dem Zugang (11) der Trennwandkolonne (5) verbunden ist.

16. Polymerisationsvorrichtung (100) zur Polymerisation eines bioabbaubaren, intermolekularen cyclischen Diesters einer alpha-Hydroxycarbonsäure der Formel I, 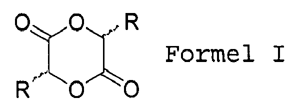 wobei R ausgewählt ist aus Wasserstoff oder linearen oder verzweigten aliphatischen Resten mit 1 bis 6 Kohlenstoffatomen, bevorzugt Dilactid, umfassend eine Reinigungsvorrichtung (1) nach einem der vorhergehenden Ansprüche.

17. Polymerisationsvorrichtung (100) nach vorhergehendem Anspruch, **dadurch gekennzeichnet, dass** der Reinigungsvorrichtung (1) mindestens ein Polymerisationsreaktor nachgeschaltet ist.

18. Polymerisationsvorrichtung (100) nach vorhergehendem Anspruch, **dadurch gekennzeichnet, dass** der Polymerisationsreaktor mindestens einen Rührkessel (109) sowie nachgeschaltet, mindestens einen Strömungsreaktor (110) umfasst.

19. Polymerisationsvorrichtung (100) nach einem der Ansprüche 16 bis 18, **dadurch gekennzeichnet, dass** der Reinigungsvorrichtung (1) mindestens eine Kondensationsvorrichtung (107) nachgeschaltet ist.

20. Verfahren zur zumindest teilweisen Abtrennung eines bioabbaubaren, intermolekularen cyclischen Diesters einer alpha-Hydroxycarbonsäure der Formel I 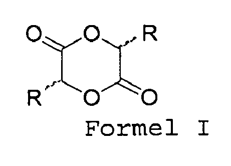 wobei R ausgewählt ist aus Wasserstoff oder linearen oder verzweigten aliphatischen Resten mit 1 bis 6 Kohlenstoffatomen aus Stoffgemischen, enthaltend den Diester der Formel I sowie die dazu korrespondierende alpha-Hydroxycarbonsäure der Formel II 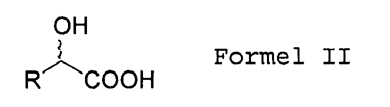 durch folgende Schritte:
a) Einspeisen des Stoffgemisches in eine eine Trennwandkolonne aufweisende Reinigungsvorrichtung, wobei die Reinigungsvorrichtung mindestens einen Seitenabzug aufweist,
b) Auftrennen des Stoffgemisches, wobei die Säure der Formel II in gasförmigem Aggregatszustand anfällt und
c) Entnahme des gereinigten Diesters der Formel I über den mindestens einen Seitenabzug.

21. Verfahren nach vorhergehendem Anspruch, **dadurch gekennzeichnet, dass** der Diester der Formel I in flüssigem Aggregatszustand entnommen wird.

22. Verfahren nach einem der Ansprüche 20 bis 21, **dadurch gekennzeichnet, dass** der Diester der Formel I in einer solchen Reinheit erhalten wird, dass die Konzentration freier Carbonsäuregruppen maximal 50 mmol/kg, bevorzugt maximal 30 mmol/kg, besonders bevorzugt maximal 20 mmol/kg beträgt.

23. Verfahren nach einem der Ansprüche 20 bis 22, **dadurch gekennzeichnet, dass** die alpha-Hydroxycarbonsäure der Formel II als Kopfprodukt abgezogen wird.

24. Verfahren nach einem der Ansprüche 20 bis 23, **dadurch gekennzeichnet, dass** im Stoffgemisch mindestens ein weiterer Stoff, ausgewählt aus der Gruppe bestehend aus Wasser, korrespondierenden Oligomeren der alpha-Hydroxycarbonsäure der Formel III, 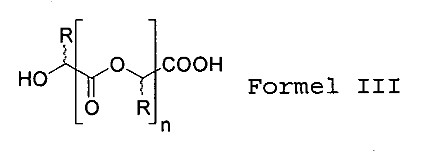 wobei n = 1 bis 10 ist und R gemäß Anspruch 1 definiert ist und/oder Mischungen hieraus, enthalten ist.

25. Verfahren nach vorhergehendem Anspruch, **dadurch gekennzeichnet, dass** Wasser als Kopfprodukt und/oder die Oligomeren der alpha-Hydroxycarbonsäure der Formel III als Sumpfprodukt abgezogen werden.

26. Verfahren nach einem der Ansprüche 20 bis 25, **dadurch gekennzeichnet, dass** das Stoffgemisch der Trennwandkolonne als gasförmiges, flüssiges und/oder als zweiphasiges Gemisch zugeführt wird.

27. Verfahren nach einem der Ansprüche 20 bis 26, **dadurch gekennzeichnet, dass** der Gewichtsanteil des cyclischen Diesters der Formel I in dem der Reinigungsvorrichtung zugeführten Stoffgemisch mindestens 50 Gew.-%, bevorzugt mindestens 75 Gew.-%, besonders bevorzugt mindestens 80 Gew.-% beträgt.

28. Verfahren nach einem der Ansprüche 20 bis 27, **dadurch gekennzeichnet, dass** die Reinigungsvorrichtung bei Drücken kleiner 120 mbar, bevorzugt kleiner 100 mbar betrieben wird.

29. Verfahren nach einem der Ansprüche 20 bis 28, **dadurch gekennzeichnet, dass** das zu trennende Stoffgemisch mit einer Temperatur zwischen 90 °C und 210 °C, bevorzugt zwischen 110 °C und 140 °C in die Trennkolonne der Reinigungsvorrichtung eingespeist wird.

30. Verfahren nach einem der Ansprüche 20 bis 29, **dadurch gekennzeichnet, dass** der cyclische Diester der Formel I Dilactid und die alpha-Hydroxycarbonsäure der Formel II Milchsäure ist.

31. Verfahren nach vorhergehendem Anspruch, **dadurch gekennzeichnet**, **dadurch gekennzeichnet, dass** nach erfolgter Entnahme des abgetrennten Dilactids mindestens ein weiterer Trennungsschritt zur Separation von L- und Meso-Dilactid erfolgt.

32. Verfahren nach vorhergehendem Anspruch, **dadurch gekennzeichnet, dass** der mindestens eine weitere Trennungsschritt ausgewählt ist aus der Gruppe bestehend aus Rektifikation und/oder Kristallisation.

33. Verfahren nach Anspruch 30, **dadurch gekennzeichnet, dass** gleichzeitig eine Auftrennung des Dilactids in eine Meso-Dilactid-reiche Fraktion und eine L-Dilactid-reiche Fraktion erfolgt, wobei die Meso-Dilactid-reiche Fraktion an mindestens einem ersten Seitenabzug und die L-Dilactid-reiche Fraktion an mindestens einem zweiten Seitenabzug entnommen wird, mit der Maßgabe, dass der erste Seitenabzug bezüglich des zweiten Seitenabzugs an der Reinigungsvorrichtung weiter kopfseitig angeordnet ist.

34. Verfahren nach vorhergehendem Anspruch, **dadurch gekennzeichnet, dass** der Gehalt des Meso-Dilactids in der L-Dilactid-reichen Fraktion maximal 10 Gew.-%, bevorzugt maximal 6 Gew.-%, besonders bevorzugt maximal 4 Gew.-% beträgt.

35. Verfahren nach einem der Ansprüche 33 oder 34, **dadurch gekennzeichnet, dass** der Gehalt des L-Dilactids in der Meso-Dilactid-reichen Fraktion maximal 60 Gew.-%, bevorzugt maximal 50 Gew.-%, besonders bevorzugt maximal 40 Gew.-% beträgt.

36. Verfahren nach einem der Ansprüche 33 bis 35, **dadurch gekennzeichnet, dass** der Gehalt des Meso-Dilactids in der L-Dilactid-reichen Fraktion durch anschließende Kristallisation weiter verringert wird.

37. Verfahren nach vorhergehendem Anspruch, **dadurch gekennzeichnet, dass** die durch Kristallisation abgetrennte Meso-Dilactid-reiche Fraktion dem Stoffgemisch, das in die Trennwandkolonne eingespeist wird, wieder zugesetzt wird.

38. Verfahren nach einem der Ansprüche 33 bis 37, **dadurch gekennzeichnet, dass** der Gehalt des L-Dilactids in der Meso-Dilactid-reichen Fraktion durch anschließende Rektifikation weiter verringert wird.

39. Verfahren nach vorhergehendem Anspruch, **dadurch gekennzeichnet, dass** die durch Rektifikation abgetrennte L-Dilactid-reiche Fraktion dem Stoffgemisch, das in die Trennwandkolonne eingespeist wird, wieder zugesetzt wird.

40. Verfahren nach einem der vorhergehenden Ansprüche, **dadurch gekennzeichnet, dass** das Stoffgemisch aus einer vorgeschalteten Kondensationsvorrichtung stammt.

41. Verfahren nach einem der Ansprüche 20 bis 40 unter Verwendung einer Reinigungsvorrichtung (1) nach einem der Ansprüche 1 bis 15 und/oder einer Polymerisationsvorrichtung nach einem der Ansprüche 16 bis 19.

42. Verwendung einer Reinigungsvorrichtung (1) nach einem der Ansprüche 1 bis 15 zur Reinigung von Dilactid, zur Herstellung von im Wesentlichen enantionmerenreinen L-Dilactid und/oder bei der Herstellung von Polylactid.

43. Verwendung des Verfahrens nach einem der Ansprüche 20 bis 41 zur Reinigung von Dilactid, zur Herstellung von im Wesentlichen enantionmerenreinen L-Dilactid und/oder bei der Herstellung von Polylactid.

44. Verwendung einer Polymerisationsvorrichtung nach einem der Ansprüche 16 bis 19 zur Herstellung von Polylactid.
